# EUROPEAN PATENT APPLICATION

(11) **EP 2 755 271 A1**
(43) Date of publication of application: **16.07.2014**
(21) Application number: 12830741.0
(22) Date of filing: 09.03.2012
(51) Int. Cl.: H01M 10/052, H01M 2/16, H01M 4/133, H01M 4/587, H01M 10/0568

(54) **NONAQUEOUS ELECTROLYTE SECONDARY BATTERY**

(30) Priority: 09.09.2011 JP 2011197207
(71) Applicant: Ricoh Company, Ltd., Tokyo 143-8555 (JP); Kyushu University, Fukuoka-shi, Fukuoka 812-8581 (JP)
(72) Inventor: ONAGI, Nobuaki, Tokyo 143-8555 (JP); HIBINO, Eiko, Tokyo 143-8555 (JP); OKADA, Susumu, Tokyo 143-8555 (JP); ISHIHARA, Tatsumi, Fukuoka-shi Fukuoka 812-8581 (JP)
(74) Representative: Maury, Richard Philip
(86) International application number: PCT/JP2012/056194
(87) International publication number: WO 2013/035361

(57) **Abstract**

To provide a nonaqueous electrolyte secondary battery, containing: a positive electrode, which contains a positive electrode active material capable of inserting and detaching anions; a negative electrode, which contains a negative electrode active material capable of accumulating and releasing metal lithium, or lithium ions, or both thereof; and a nonaqueous electrolyte formed by dissolving a lithium salt in a nonaqueous solvent, wherein the nonaqueous electrolyte secondary battery contains a solid lithium salt at 25°C, and discharge voltage of 4.0 V.

## Description

### Technical Field

The present invention relates to a nonaqueous electrolyte secondary battery, in which anions are inserted into and detached from a positive electrode, and lithium ions are inserted into and detached from a negative electrode.

### Background Art

In recent years, accompanied by downsizing and enhanced performance of mobile devices, a nonaqueous electrolyte secondary battery having high energy density has improved properties thereof, and become widespread. Also, attempts are underway to improve energy density per unit weight of a nonaqueous electrolyte secondary battery, aiming to expand its application to electric vehicles.

Conventionally, a lithium ion secondary battery including a positive electrode of lithium-cobalt composite oxide, a negative electrode of carbon, and a nonaqueous electrolyte obtained by dissolving a lithium salt in a nonaqueous solvent has been widely used as the nonaqueous electrolyte secondary battery.

Meanwhile, there is a nonaqueous electrolyte secondary battery, which is charged and discharged by intercalation or deintercalation of anions in a nonaqueous electrolyte to a positive electrode of a material, such as an electroconductive polymer, and a carbonaceous material, and by intercalation or deintercalation of lithium ions in the nonaqueous electrolyte to a negative electrode of a carbonaceous material (this type of battery may be referred to as "dual carbon battery cell" hereinafter) (see PTL 1).

In the dual carbon battery cell, as indicated by the following reaction formula, the cell is charged by intercalation of anions such as PF₆⁻ from the nonaqueous electrolyte to the positive electrode and by intercalation of Li⁺ from the nonaqueous electrolyte to the negative electrode, and the cell is discharged by deintercalation of anions such as PF₆⁻ and so on from the positive electrode and deintercalation of Li⁺ from the negative electrode to the nonaqueous electrolyte.
**Positive electrode:** 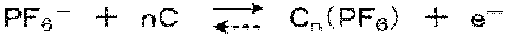
**Negative electrode:** 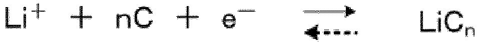
→ **charging reaction**
← **discharge reaction**

A discharge capacity of the dual carbon battery cell is determined by an anion storage capacity of the positive electrode, an amount of possible anion release of the positive electrode, a cation storage amount of the negative electrode, an amount of possible cation release of the negative electrode, and an amount of anions and amount of cations in the nonaqueous electrolyte. Accordingly, in order to improve the discharge capacity of the dual carbon battery cell, it is necessary to increase not only a positive electrode active material and a negative electrode active material, but also an amount of the nonaqueous electrolyte containing lithium salt (see NPTL 1).

As described above, a quantity of electricity the dual carbon battery has is proportional to a total amount of anions and cations in the nonaqueous electrolyte. Therefore, the energy stored in the battery is proportional to a total mass of the nonaqueous electrolyte, as well as the positive and negative electrode active materials. Accordingly, it is difficult to increase energy density per unit weight of the battery. When a nonaqueous electrolyte having a lithium salt concentration of about 1 mol/L, which is commonly used for a lithium ion secondary battery, is used for the dual carbon cell battery, a large amount of a nonaqueous electrolyte is required compared to a lithium ion secondary battery. When a nonaqueous electrolyte having high lithium salt concentration, i.e., about 5 mol/L, is used, on the other hand, it is difficult to assemble a battery, as a viscosity of the electrolyte is high.

### Citation List

### Patent Literature

PTL 1: Japanese Patent Application Laid-Open (JP-A) No. 2005-251472

### Non-Patent Literature

NPL 1: Journal of The Electrochemical Society, 147(3) 899-901(2000)

### Summary of Invention

### Technical Problem

The present invention aims to solve the aforementioned various problems in the art, and to achieve the following object. Namely, the object of the present invention is to provide a nonaqueous electrolyte secondary battery having a high discharge capacity, and has the improved energy density per unit weight thereof.

### Solution to Problem

The means for solving the aforementioned problems are as follows:
The nonaqueous electrolyte secondary battery of the present invention contains:
   a positive electrode, which contains a positive electrode active material capable of inserting and detaching anions;
   a negative electrode, which contains a negative electrode active material capable of accumulating and releasing metal lithium, or lithium ions, or both thereof; and
   a nonaqueous electrolyte formed by dissolving a lithium salt in a nonaqueous solvent,
wherein the nonaqueous electrolyte secondary battery contains a solid lithium salt at 25°C, and discharge voltage of 4.0 V.

In the nonaqueous electrolyte secondary battery of the present invention, a lithium salt, which has been excessively added in a solid state inside the battery, is transferred as anions and cations from the nonaqueous electrode to positive and negative electrodes, as the anions and cations are accumulated in the positive and negative electrodes when a battery is charged. Therefore, a lithium salt concentration of the nonaqueous electrolyte is reduced. As a result, the lithium salt, which has been excessively added in a solid state inside the battery, is dissolved in the nonaqueous electrolyte, to thereby compensate the reduction in the concentration of the nonaqueous electrolyte. After the positive and negative electrodes are charged, anions and cations are released from the positive and negative electrodes to the nonaqueous electrolyte, as the battery is discharged. When the concentration of the lithium salt in the nonaqueous electrolyte is saturated, a lithium salt is precipitated, and the solid lithium salt is retained inside the battery.

As mentioned above, by retaining anions and cations, which bear charges of charging and discharging, as a solid lithium salt inside the battery, an amount of the nonaqueous electrolyte for use can be kept small, a high discharge capacity can be provided to the battery, and energy density per unit weight of the battery can be improved. Moreover, it is not necessary to use a nonaqueous electrolyte of high concentration, assembling of a battery can be easily carried out.

### Advantageous Effects of Invention

The present invention can solve the aforementioned various problems in the art, achieve the aforementioned object, and provide a nonaqueous electrolyte secondary battery having a high discharge capacity, and has the improved energy density per unit weight thereof.

### Brief Description of Drawings

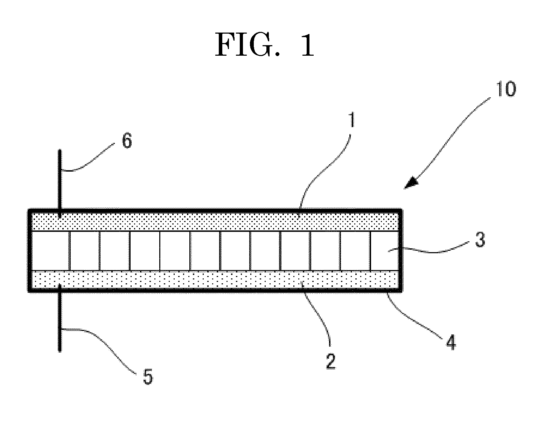

FIG. 1 is a schematic diagram illustrating one example of the nonaqueous electrolyte secondary battery of the present invention.

### Description of Embodiments

### (Nonaqueous Electrolyte Secondary Battery)

The nonaqueous electrolyte secondary battery of the present invention contains a positive electrode, a negative electrode, and a nonaqueous electrolyte, and may further contain a separator, and other members according to the necessity.

In the present invention, the nonaqueous electrolyte secondary battery contains a solid lithium salt at 25°C, and discharge voltage of 4.0 V. The nonaqueous electrolyte secondary battery is used at discharge voltage of 3.0 V to 5.4 V regardless of a type of a nonaqueous electrolyte for use, but a solid lithium salt is always present inside the battery at 25°C, and the discharge voltage of 4.0 V.

The solid lithium salt can be located anywhere without any limitation, provided that it is inside the nonaqueous electrolyte secondary battery. For example, the solid lithium salt may be in the state where it is precipitated in the nonaqueous electrolyte. The solid lithium salt is preferably contained in the positive electrode, the negative electrode, the separator, or an inner side of a battery outer tin, or a combination thereof.

Specifically, the solid lithium salt is preferably contained in a surface of an adjacent area to the surface of at least the positive electrode, the negative electrode, the separator, or the inner side of the battery outer tin or a combination thereof. Such preferably embodiment includes (1) a case where the solid lithium salt is present in directly contact with a surface of at least the positive electrode, the negative electrode, the separator, or the inner side of the battery outer tin, or a combination thereof, (2) a case where the solid lithium salt is present via another material on a surface of at least the positive electrode, the negative electrode, the separator, or the inner side of the battery outer tin, or a combination thereof, and (3) a case where the solid lithium salt is present in voids formed by eluting a lithium salt from a surface of either the positive electrode or the negative electrode.

Whether or not the nonaqueous electrolyte secondary battery contains a solid lithium salt at 25°C, and discharge voltage of 4.0 V can be confirmed by disassembling the nonaqueous electrolyte secondary battery after discharging at 25°C, and discharge voltage of 4.0 V, and analyzing a surface or adjacent area of a surface of at least the positive electrode, the negative electrode, the separator, or the inner side of the battery outer tin, or a combination thereof by a method, such as (1) a method for measuring crystals of LiPF₆ through microscopic observation, (2) a method for measuring a spectrum specific to LiPF₆ through infrared spectroscopy (IR), (3) a method for measuring a spectrum specific to LiPF₆ through X-ray diffraction spectroscopy, (4) a method for measuring an optical emission spectrum of an element through inductively coupled plasma (ICP) optical emission spectroscopy, and (5) a method for measuring Raman spectrum specific to LiPF₆ through Raman spectroscopy.

In the method of (4), analysis of constitutional elements of LiPF₆ is performed. If LiPF₆ is found in the same solid material, it can be said that LiPF₆ crystals are present. This is because anion or cation is intercalated to an electrode, and therefore anion and cation are not present at the same time.

The phrase "contains a solid lithium salt at 25°C, and discharge voltage of 4.0 V" means "containing the excess lithium salt" inside the battery, which is, in other words, any of the following (1) to (4).
(1) The nonaqueous electrolyte contains an excess amount of a lithium salt such that the lithium salt is precipitated during discharging of the battery, part of the lithium salt is precipitated as a solid as discharging of the battery is progressed, and the solid lithium salt is dissolved in the nonaqueous electrolyte and inserted into an electrode as the battery is charged. As a result of this, an amount of the lithium salt, which is larger than the amount thereof the nonaqueous electrolyte can contain, can be contained inside the battery, and therefore a capacity of the battery can be increased.
(2) The solubility of the lithium salt to the nonaqueous electrolyte under use conditions (low temperature to room temperature to high temperature) is supersaturation. The supersaturation of the solubility of the lithium salt to the nonaqueous electrolyte varies depending on temperature, a type of the nonaqueous solvent for use, or a type of the lithium salt for use, but the supersaturation of the solubility of LiPF₆ is 5 mol/L to 7 mol/L at 25°C in the case where a mixed solvent of ethylene carbonate (EC) and dimethyl carbonate (DMC) (1:2 (volume ratio)) is used as a solvent, and LiPF₆ is used as the lithium salt. The supersaturation of the solubility of LiPF₆ is 0.5 mol/L or less at -30°C, and hardly any lithium salt is dissolved in the nonaqueous electrolyte. The supersaturation of the solubility of LiPF₆ is 7 mol/L to 8 mol/L at 80°C. Note that, a viscosity of the nonaqueous electrolyte becomes high at -30°C, and charging and discharging of the battery cannot be performed smoothly as the state of the nonaqueous electrolyte is close to a solid state, and ion conductivity thereof becomes small.
(3) A solid lithium salt is present inside the battery during discharging of the battery. The state of the nonaqueous electrolyte can be non-supersaturation during charging, but the state thereof becomes supersaturation during discharging so that a solid lithium salt is precipitated in some area inside the battery.
(4) Since a solid lithium salt is always precipitated in some area inside the battery, as discharging of the battery progressed, a solid lithium salt is contained in some area inside the battery 30 minutes after the start of discharging of the battery with current of 1C. The term "1C" is a quantity of electricity with which a capacity of the battery can be used up for 1 hour.

The presence of the excess lithium salts (e.g., LiPF₆) can be confirmed by disassembling the nonaqueous electrolyte secondary battery after discharging, and analyzing a surface or adjacent area of a surface of at least the positive electrode, the negative electrode, the separator, or the inner side of the battery outer tin, or a combination thereof by a method, such as (1) a method for measuring crystals of LiPF₆ through microscopic observation, (2) a method for measuring a spectrum specific to LiPF₆ through infrared spectroscopy (IR), (3) a method for measuring a spectrum specific to LiPF₆ through X-ray diffraction spectroscopy, (4) a method for measuring an optical emission spectrum of an element through inductively coupled plasma (ICP) optical emission spectroscopy, and (5) a method for measuring Raman spectrum specific to LiPF₆ through Raman spectroscopy.

An addition of the excess lithium salt is explained hereinafter.

An amount of the excess lithium salt is determined based on the smaller charge electricity amount of the electrode, that is, a quantity of electricity of the positive electrode active material, or negative electrode active material, whichever smaller. The amount thereof is determined as an amount that a total amount of the lithium salt originated from the nonaqueous electrolyte, and the lithium salt added in the form of a solid becomes equivalent to the charge electricity amount of the electrode. Specifically, in order to prevent Li metal from precipitating on a surface of the negative electrode during charging, a quantity of electricity of the negative electrode is larger than a quantity of electricity of the positive electrode. In the case where the positive electrode has the active material properties that a quantity of electricity of the positive electrode is 100 mAh/g and the amount of LiPF₆ added is 10 mg, a quantity of electricity of the positive electrode is 3.6 C. A quantity of electricity of anions 1 mol of LiPF₆ has is 1 F (faraday), i.e., 9.64 × 10⁴ C. Accordingly, LiPF₆, which has an electric capacity equivalent to 3.6 C is 3.6/9.64 × 10⁴ = 3.7 × 10⁻⁵ mol. This is specifically 5.6 mg. Namely, it means that 5.6 mg or greater of LiPF₆ is required as a sum of both LiPF₆ originated from the nonaqueous electrolyte and LiPF₆ originated from the solid added. In practice, the excess lithium salt is added so that a total amount of LiPF₆ is required as a sum of both originated from the nonaqueous electrolyte and LiPF₆ originated from the solid added becomes 5.6 mg or greater.

In the case where an amount of solvent of the nonaqueous electrolyte is insufficient, all of the lithium salt cannot be retained in the state where the lithium salt is dissolved in the nonaqueous electrolyte, as ions come out from the electrode. The nonaqueous electrolyte is saturated with the lithium salt.

When discharge is progressed even further and ions come out from the electrode, the lithium salt is precipitated from the electrolyte and turned into a solid.

During charging, the electrode still has a room to include ions therein, even through ions dissolved in the nonaqueous electrolyte are included.

The lithium salt, which has been dissolved in the nonaqueous electrolyte, enters into the electrode to lower a concentration of the lithium salt of the nonaqueous electrolyte, and the precipitated lithium salt is then dissolved in the nonaqueous electrolyte, which is further taken into the electrode.

This action continues until the inside of the positive electrode is filled with PF₆ ions, and the inside of the negative electrode is filled with Li ions. In this manner, the excess lithium salt, which has been present in the precipitated state in the nonaqueous electrolyte and has not been able to dissolved in the nonaqueous electrolyte, is taken into the electrode and contributes to charging and discharging.

Note that, the charge amounts of the positive and negative electrodes are not necessarily balanced, and therefore the both electrodes are not necessarily filled with ions completely at the time of charging.

In the present invention, a solid lithium salt is added inside the battery other than the nonaqueous electrolyte. In this case, the addition of the solid lithium salt is not simple addition to the nonaqueous electrolyte, but it is preferably carried out by at least any of (1) a method for mixing a solid lithium salt with the positive electrode active material in the case where the solid lithium salt is added to the positive electrode, (2) a method for mixing a solid lithium salt with the negative electrode active material, in the case where the solid lithium salt is added to the negative electrode, or (3) a method for depositing a solid lithium salt on a separator in the case where the solid lithium salt is added to the separator. Specific addition methods of the (1) to (3) are explained below. Note that, details of the positive electrode active material, the negative electrode active material, the separator, and the lithium salt are explained later.
(1) In the case where a solid lithium salt is added to the positive electrode, for example, after kneading a black lead powder serving as the positive electrode active material and a LiPF₆ powder serving as the solid lithium salt together, butadiene rubber serving as a binder, polyvinyl alcohol serving as a thickener, and alcohol serving as a solvent are added to the kneaded product, the resulting mixture is kneaded, and applied on an aluminum foil serving as a positive electrode collector, and the resultant is dried to thereby prepare a positive electrode.
   An amount of the solid lithium salt added to the positive electrode is appropriately selected depending on the intended purpose without any limitation, but the amount thereof is preferably 10 parts by mass to 80 parts by mass, relative to 100 parts by mass of the positive electrode active material.
   Whether or not the solid lithium salt is kneaded into the positive electrode can be determined by finding all Li, P, and F by an elemental analysis of inductively coupled plasma (ICP) optical emission spectroscopy. This is because the one intercalated to the positive electrode is only an anion PF₆⁻, and therefore all of Li, P, and F are not present at the same time unless there is a crystal of LiPF₆.
(2) In the case where a solid lithium salt is added to the negative electrode, for example, after kneading a black lead powder serving as the negative electrode active material, and a LiPF₆ powder serving as the solid lithium salt, butadiene rubber serving as a binder, polyvinyl alcohol serving as a thickener, and alcohol serving as a solvent are added to the kneaded product, the resulting mixture is kneaded, and applied onto a copper foil serving as a negative electrode collector, and the resultant is dried to thereby prepare a negative electrode.
   An amount of the solid lithium salt to the negative electrode is appropriately selected depending on the intended purpose without any limitation, but the amount thereof is preferably 10 parts by mass to 80 parts by mass, relative to 100 parts by mass of the negative electrode active material.
   Whether or not the solid lithium salt is kneaded into the negative electrode can be determined by finding all of Li, P, and F at the same time by an elemental analysis of inductively coupled plasma (ICP) optical emission spectroscopy.
(3) In the case where the solid lithium salt is added to the separator, for example, a small amount of a binder and a LiPF₆ powder serving as the solid lithium salt are mixed, and the mixture is deposited on a porous sheet, such as glass fiber filter paper, followed by drying to thereby prepare a separator.
   An amount of the solid lithium salt added to the separator is appropriately selected depending on the intended purpose without any limitation, but it is preferably 10 parts by mass to 300 parts by mass relative to 100 parts by mass of the separator.

The nonaqueous electrolyte secondary battery of the present invention is appropriately selected depending on the intended purpose without any limitation, provided that the nonaqueous electrolyte secondary battery contains a solid lithium salt at 25°C, discharge voltage of 4.0 V (namely, it contains the excess lithium salt inside the battery). As described above, the nonaqueous electrolyte secondary battery contains a positive electrode, a negative electrode, and a nonaqueous electrolyte, and may further contain a separator, and other members according to the necessity.

As the nonaqueous electrolyte secondary battery of the present invention contains excess lithium salts therein, the nonaqueous electrolyte secondary battery has identical structure to a conventional nonaqueous electrolyte secondary battery as described below, other than that a solid lithium salt is contained in at least one selected from the group consisting of a positive electrode, a negative electrode, and a separator in the aforementioned methods.

### <Positive Electrode>

The positive electrode is appropriately selected depending on the intended purpose without any limitation, provided that the positive electrode contains a positive electrode active material. Examples of the positive electrode include a positive electrode, which contains a positive electrode material containing a positive electrode active material, provided on a positive electrode collector.

A shape of the positive electrode is appropriately selected depending on the intended purpose without any limitation, and examples thereof include a plate shape.

### <<Positive Electrode Material>>

The positive electrode material is appropriately selected depending on the intended purpose without any limitation. For example, the positive electrode material contains at least a positive electrode active material, and may further contain an electroconductive agent, a binder, and a thickener according to necessity.

### -Positive Electrode Active Material-

The positive electrode active material is appropriately selected depending on the intended purpose without any limitation, provided that it is a material capable of inserting and detaching anions. Examples thereof include a carbonaceous material, and an electroconductive polymer. Among them, a carbonaceous material is particularly preferable because of its high energy density.

Examples of the electroconductive polymer include polyaniline, polypyrrole, and polyparaphenylene.

Examples of the carbonaceous material include: black-lead (graphite), such as coke, artificial graphite, and natural graphite; and a thermal decomposition product of an organic material under various thermal decomposition conditions. Among them, artificial graphite, and natural graphite are particularly preferable.

The carbonaceous material is preferably a carbonaceous material having high crystallinity. The crystallinity can be evaluated by X-ray diffraction, or Raman analysis. For example, in a powder X-ray diffraction pattern thereof using CuKα rays, the intensity ratio I_{2θ=22}._{3°}/I_{2θ=26}._{4°} of the diffraction peak intensity I_{2θ=22.3°} at 2θ=22.3° to the diffraction peak intensity I₂₀₌₂₆._{4°} at 2θ=26.4° is preferably 0.4 or less.

A BET specific surface area of the carbonaceous material as measured by nitrogen adsorption is preferably 1 m²/g to 100 m²/g. The average particle diameter (median diameter) of the carbonaceous material as measured by a laser diffraction-scattering method is preferably 0.1 µm to 100 µm.

### -Binder-

The binder is appropriately selected depending on the intended purpose without any limitation, provided that the binder is a material stable to a solvent or electrolytic solution used during the production of an electrode. Examples of the binder include: a fluorine-based binder, such as polyvinylidene fluoride (PVDF), and polytetrafluoroethylene (PTFE); styrene-butadiene rubber (SBR); and isoprene rubber. These may be used alone, or in combination.

### -Thickener-

Examples of the thickener include carboxy methyl cellulose, methyl cellulose, hydroxymethyl cellulose, ethyl cellulose, polyvinyl alcohol, oxidized starch, starch phosphate, and casein. These may be used alone, or in combination.

### -Electroconductive Agent-

Examples of the electroconductive agent include: a metal material, such as copper, and aluminum; and a carbonaceous material, such as carbon black, and acetylene black. These may be used alone, or in combination.

### <<Positive Electrode Collector>>

A material, shape, size, and structure of the positive electrode collector are appropriately selected depending on the intended purpose without any limitation.

The material of the positive electrode collector is appropriately selected depending on the intended purpose without any limitation, provided that it is composed of an electroconductive material. Examples thereof include stainless steel, nickel, aluminum, copper, titanium, and tantalum. Among them, stainless steel and aluminum are particularly preferable.

The shape of the positive electrode collector is appropriately selected depending on the intended purpose without any limitation, but it is preferably a porous body, such as in the form of a net, or mesh.

The size of the positive electrode collector is appropriately selected depending on the intended purpose without any limitation, provided that it is a size appropriately used in an nonaqueous electrolyte secondary battery.

### -Production Method of Positive Electrode-

The positive electrode can be produced by applying a positive electrode material, which has been formed into slurry by appropriately adding the binder, the thickener, the electroconductive agent, and a solvent to the positive electrode active material, onto the positive electrode collector, followed by drying. The solvent is appropriately selected depending on the intended purpose without any limitation, and examples thereof include an aqueous solvent, and an organic solvent. Examples of the aqueous solvent include water and alcohol. Examples of the organic solvent include N-methyl pyrrolidone (NMP), and toluene.

Note that, the positive electrode active material may be subjected to roll molding as it is to form a sheet electrode, or to compression molding to form a pellet electrode.

### <Negative Electrode>

The negative electrode is appropriately selected depending on the intended purpose without any limitation, provided that the negative electrode contains a negative electrode active material. Examples of the negative electrode include a negative electrode, which contains a negative electrode material containing a negative electrode active material, provided on a negative electrode collector.

A shape of the negative electrode is appropriately selected depending on the intended purpose without any limitation, and examples thereof include a plate shape.

### <<Negative Electrode Material>>

The negative electrode material may be composed only of a negative electrode active material, or may further contain a binder, and electroconductive agent according to necessity, together with the negative electrode active material.

### -Negative Electrode Active Material-

The negative electrode active material is appropriately selected depending on the intended purpose without any limitation, provided that it is a material capable of accumulating and releasing metal lithium, or lithium ions, or both thereof. Examples thereof include: a carbonaceous material; metal oxide capable of accumulating and releasing lithium, such as antimony-doped tin oxide, and silicon monoxide; metal or alloy capable of forming an alloy with lithium, such as aluminum, tin, silicon, and zinc; a composite alloy compound composed of metal capable of forming an alloy with lithium, an alloy containing the metal, and lithium; and lithium metal nitride, such as lithium cobalt nitride. These may be used alone, or in combination. Among them, the carbonaceous material is particularly preferable in view of safety and cost.

Examples of the carbonaceous material include: black-lead (graphite), such as coke, artificial graphite, and natural graphite; and a thermal decomposition product of an organic material under various thermal decomposition conditions. Among them, artificial graphite, and natural graphite are particularly preferable.

### -Binder-

The binder is appropriately selected depending on the intended purpose without any limitation, and examples thereof include: a fluorine-based binder, such as polyvinylidene fluoride (PVDF), and polytetrafluoroethylene (PTFE); ethylene-propylene-butadiene rubber (EPBR); styrene-butadiene rubber (SBR); isoprene rubber; and carboxymethyl cellulose (CMC). These may be used alone, or in combination. Among them, the fluorine-based binder, such as polyvinylidene fluoride (PVDF) and polytetrafluoroethylene (PTFE), is particularly preferable.

### -Electroconductive Agent-

Examples of the electroconductive agent include: a metal material, such as copper, and aluminum; and a carbonaceous material, such as carbon black, and acetylene black. These may be used alone, or in combination.

### <<Negative Electrode Collector>>

A material, shape, size and structure of the negative electrode collector are appropriately selected depending on the intended purpose without any limitation.

The material of the negative electrode collector is appropriately selected depending on the intended purpose without any limitation, provided that the material thereof is composed of an electroconductive material. Examples thereof include stainless steel, nickel, aluminum, and copper. Among them, stainless steel, and copper are particularly preferable.

The shape of the negative electrode collector is appropriately selected depending on the intended purpose without any limitation, but it is preferably a porous body, such as in the form of a net, or mesh.

The size of the negative electrode collector is appropriately selected depending on the intended purpose without any limitation, provided that it can be a size usable for the nonaqueous electrolyte secondary battery..

### -Production Method of Negative Electrode-

The negative electrode can be produced by applying a negative electrode material, which has been formed into slurry by appropriately adding the binder, the electroconductive agent, and a solvent to the negative electrode active material, onto the negative electrode collector, followed by drying. As for the solvent, the aforementioned solvents usable in the production method of the positive electrode can be used.

Moreover, a composition, in which the binder, the electroconductive agent, etc. are added to the negative electrode active material, may be subjected to roll molding as it is to form a sheet electrode or to compression molding to form a pellet electrode. Alternatively, a thin layer of the negative electrode active material may be formed on the negative electrode collector by a method, such as vapor deposition, sputtering, and plating.

### <Nonaqueous Electrolyte>

The nonaqueous electrolyte is an electrolytic solution formed by dissolving a lithium salt in a nonaqueous solvent.

### -Nonaqueous Solvent-

The nonaqueous solvent is appropriately selected depending on the intended purpose without any limitation, provided that it is an aprotic organic solvent. Examples thereof include: a carbonate-based organic solvent, such as cyclic carbonate, and chain carbonate; an ester-based organic solvent, such as cyclic ester, and chain ester; and an ether-based organic solvent, such as cyclic ether, and chain ether. These may be used alone, or in combination. Among them, the carbonate-based organic solvent is preferable, as it has high solubility to a lithium salt.

Examples of the cyclic carbonate include propylenecarbonate (PC), ethylenecarbonate (EC), butylene carbonate (BC), and vinylene carbonate (VC).

Examples of the chain carbonate include dimethyl carbonate (DMC), diethylcarbonate (DEC), methylethylcarbonate.

Examples of the cyclic ester include γ-butyrolactone (γBL), 2-methyl-γ-butyrolactone, acetyl-γ-butyrolactone, and γ-valerolactone.

Examples of the chain ester include alkyl propionate, dialkyl malonate, and alkyl acetate.

Examples of the cyclic ether include tetrahydrofuran, alkyl tetrahydrofuran, alkoxy tetrahydrofuran, dialkoxy tetrahydrofuran, 1,3-dioxolan, alkyl-1,3-dioxolan, and 1,4-dioxolan.

Examples of the chain ether include 1,2-dimethoxyethane (DME), diethyl ether, ethylene glycol dialkyl ether, diethylene glycol dialkyl ether, triethylene glycol dialkyl ether, and tetraethylene glycol dialkyl ether.

Among them, a mixture of ethylene carbonate (EC) and dimethyl carbonate (DMC) is preferable. In this case, as for a blending ratio (EC:DMC) of the ethylene carbonate (EC) to dimethyl carbonate (DMC), a volume ratio thereof is preferably 1:1 to 1:10, particularly preferably 1:2.

### -Lithium Salt-

The lithium salt is appropriately selected depending on the intended purpose without any limitation, and examples thereof include lithium hexafluorophosphate (LiPF₆), lithium perchlorate (LiClO₄), lithium chloride (LiCl), lithium fluoroborate (LiBF₄), LiB(C₆H₅)₄, lithium hexafluoroarsenate (LiAsF₆), lithium trifluorosulfonate (LiCF₃SO₃), lithium bistrifluoromethylsulfonyl imide (LiN(C₂F₅SO₂)₂), and lithium bisperfluoroethylsulfonyl imide (LiN(CF₂F₅SO₂)₂). These may be used alone, or in combination. Among them, LiPF₆ is particularly preferable in view of the size of the storage capacity of anions in the carbon electrode.

A concentration of the lithium salt is appropriately selected depending on the intended purpose without any limitation, but it is preferably 0.5 mol/L to 3 mol/L, and is particularly preferably about 1 mol/L in view of the viscosity.

### <Separator>

The separator is provided between a positive electrode and a negative electrode for the purpose of preventing a short circuit between the positive electrode and the negative electrode.

A material, shape, size, and structure of the separator are appropriately selected depending on the intended purpose without any limitation.

Examples of the material of the separator include: paper, such as kraft paper, vinylon blended paper, and synthetic pulp blended paper; polyolefin nonwoven fabric, such as cellophane, a polyethylene graft membrane, and polypropylene melt-flow nonwoven fabric; polyamide nonwoven fabric; and glass fiber nonwoven fabric.

Examples of the shape of the separator include a sheet shape.

The size of the separator is appropriately selected depending on the intended purpose without any limitation, provided that it is a size appropriately used for a nonaqueous electrolyte secondary battery.

The structure of the separator may be a single layer structure, or a multilayer structure.

### <Production Method of Nonaqueous Electrolyte Secondary Battery>

The nonaqueous electrolyte secondary battery of the present invention can be produced by assembling the positive electrode, the negative electrode, the nonaqueous electrolyte, and the optional separator into an appropriate shape. Moreover, other members, such as a battery outer tin, can be used according to the necessity. A method for assembling the battery is appropriately selected from commonly employed methods without any limitation.

FIG. 1 is a schematic diagram illustrating one example of the nonaqueous electrolyte secondary battery of the present invention. The nonaqueous electrolyte secondary battery 10 contains, in a battery outer tin 4, a positive electrode 1 containing a positive electrode active material capable of inserting and detaching anions, a negative electrode 2 containing a negative electrode active material capable of accumulating and releasing metal lithium, or lithium ions, or both thereof, and a separator 3 provided between the positive electrode 1 and the negative electrode 2. These positive electrode 1, negative electrode 2, and separator 3 are immersed in a nonaqueous electrolyte (not illustrated), which is formed by dissolving lithium salt in a nonaqueous solvent. Note that, "5" denotes a negative electrode lead wire, and "6" denotes a positive electrode lead wire.

### -Shape-

A shape of the nonaqueous electrolyte secondary battery of the present invention is not particularly limited, and it may be appropriately selected from various shapes typically employed depending on use thereof. Examples of the shape thereof include a cylinder electrode where a sheet electrode and a separator are spirally provided, a cylinder element having an inside-out structure, in which a pellet electrode and a separator are used in combination, and a coin element, in which a pellet electrode and a separator are laminated.

### <Use>

Use of the nonaqueous electrolyte secondary battery of the present invention is not particularly limited, and it may be used for various applications. Examples thereof include a laptop computer, a stylus-operated computer, a mobile computer, an electronic book player, a mobile phone, a mobile fax, a mobile printer, a headphone stereo, a video movie, a liquid crystal television, a handy cleaner, a portable CD, a minidisk, a transceiver, an electronic organizer, a calculator, a memory card, a mobile tape recorder, a radio, a back-up power supply, a motor, a lighting equipment, a toy, a game equipment, a clock, a strobe, and a camera.

### Examples

Examples of the present invention are explained hereinafter, but Examples shall not be construed to limit the scope of the present invention.

### (Comparative Example 1)

### <Production of Positive Electrode>

As for a positive electrode active material, a carbon powder (KS-6, manufactured by TIMCAL Ltd.). The carbon powder had a BET specific surface area by nitrogen adsorption of 20 m²/g, and had the average particle diameter (median diameter) of 3.4 µm as measured by a laser diffraction particle size analyzer (SALD-2200, manufactured by Shimadzu Corporation).

To a mixture of 10 mg of the carbon powder (KS-6, manufactured by TIMCAL Ltd.), 2.5 mg of a binder (PVDF, manufactured by KUREHA CORPORATION), and 30 mg of an electroconductive agent (contents: 95% by mass of acetylene black, and 5% by mass of polytetrafluoroethylene), 5 mL of ethanol was added, and the resulting mixture was kneaded. The resultant was pressure bonded to a stainless steel mesh, followed by drying at 200°C for 4 hours, to thereby prepare a positive electrode. A mass of the carbon powder (black lead) in the positive electrode pressure bonded to the stainless steel mesh was 10 mg.

### <Production of Negative Electrode>

As for a negative electrode active material, a carbon powder (MAGD, manufactured by Hitachi Chemical Co., Ltd.) was used. The carbon powder had a BET specific surface area by nitrogen adsorption of 4,600 m²/g, the average particle diameter (median diameter) of 20 µm as measured by a laser diffraction particle size analyzer (SALD-2200, manufactured by Shimadzu Corporation), and a tap density of 630 kg/m³.

To a mixture of 10 mg of the carbon powder (MAGD, manufactured by Hitachi Chemical Co., Ltd.), and 4 mg of a binder (a 20% by mass N-methylpyrrolidone (NMP) solution of polyvinylidene fluoride, product name: KF Polymer, manufactured by KUREHA CORPORATION), 5 mL of ethanol was added, and the resulting mixture was kneaded. The resultant was pressure bonded to a stainless steel mesh, followed by drying at 200°C for 4 hours, to thereby prepare a negative electrode. A mass of the carbon powder (black lead) in the negative electrode pressure bonded to the stainless steel mesh was 10 mg.

### <Nonaqueous Electrolyte>

As for a nonaqueous electrolyte, 0.3 mL of a solvent [ethylene carbonate (EC): dimethyl carbonate (DMC = 1:2 (volume ratio))], in which 1 mol/L LiPF₆ had been dissolved, was prepared.

### <Separator>

As a separator, a laboratory filter paper (ADVANTEC GA-100 GLASS FIBER FILTER) was provided.

### <Production of Battery>

In an argon dry box, the produced positive electrode and negative electrode were provided adjacent to each other with the separator being present between the positive electrode and the negative electrode as illustrated in FIG. 1, to thereby produce a semi-open cell type nonaqueous electrolyte secondary battery of Comparative Example 1.

### (Comparative Example 2)

A semi-open cell type nonaqueous electrolyte secondary battery of Comparative Example 2 was produced in the same manner as in Comparative Example 1, provided that the following nonaqueous electrolyte was used as a nonaqueous electrolyte.

### <Nonaqueous Electrolyte>

As for a nonaqueous electrolyte, 0.3 mL of a solvent [ethylene carbonate (EC): dimethyl carbonate (DMC) = 1:2 (volume ratio)], in which 5 mol/L of LiPF₆ had been dissolved, was prepared.

### (Example 1)

A semi-open cell type nonaqueous electrolyte secondary battery of Example 1 was produced in the same manner as in Comparative Example 1, provided that the positive electrode produced in the following manner was used as a positive electrode.

### <Production of Positive Electrode>

To a mixture of 10 mg of a carbon powder (KS-6, manufactured by TIMCAL Ltd.), which was identical to the one used in Comparative Example 1, 200 mg of a solid LiPF₆ powder, 2.5 mg of a binder (PVDF, manufactured by KUREHA CORPORATION), and 30 mg of an electroconductive agent (contents: 95% by mass of acetylene black, and 5% by mass of polytetrafluoroethylene), 5 mL of ethanol was added, and the resulting mixture was kneaded. The resultant was pressure bonded to a stainless steel mesh, followed by drying at 200°C for 4 hours, to thereby prepare a positive electrode. A mass of the carbon powder (black lead) in the positive electrode pressure bonded to the stainless steel mesh was 10 mg.

### (Example 2)

A semi-open cell type nonaqueous electrolyte secondary battery of Example 2 was produced in the same manner as in Comparative Example 1, provided that the negative electrode produced in the following manner as used as a negative electrode.

### <Production of Negative Electrode>

To a mixture of 10 mg of a carbon powder (MAGD, manufactured by Hitachi Chemical Co., Ltd.), which was identical to the one used in Comparative Example 1, 4 mg of a binder (a 20% by mass N-methylpyrrolidone (NMP) solution of polyvinylidene fluoride, product name: KF Polymer, manufactured by KUREHA CORPORATION), and 200 mg of a solid LiPF₆ powder, 5 mL of ethanol was added, and the resulting mixture was kneaded. The resultant was pressure bonded to a stainless steel mesh, followed by drying at 200°C for 4 hours, to thereby prepare a negative electrode. A mass of the carbon powder (black lead) in the negative electrode pressure bonded to the stainless steel mesh is 10 mg.

### (Example 3)

A semi-open cell type nonaqueous electrolyte secondary battery of Example 3 was produced in the same manner as in Comparative Example 1, provided that the separator produced in the following manner was used as a separator.

### <Separator>

Onto laboratory filter paper (ADVANTEC GA-100 GLASS FIBER FILTER), which was identical to the one used in Comparative Example 1, 200 mg of a solid LiPF₆ powder was applied and pressure bonded. The resultant was used as a separator.

### (Example 4)

A semi-open cell type nonaqueous electrolyte secondary battery of Example 4 was produced in the same manner as in Example 1, provided that the amount of the solid LiPF₆ powder in the positive electrode was changed to 150 mg, and the negative electrode produced in the following manner was used as a negative electrode.

### <Production of Negative Electrode>

To a mixture of 10 mg of carbon powder (MAGD, manufactured by Hitachi Chemical Co., Ltd.), which was identical to the one used in Comparative Example 1, 4 mg of a binder (a 20% by mass N-methylpyrrolidone (NMP) solution of polyvinylidene fluoride, product name: KF Polymer, manufactured by KUREHA CORPORATION), and 50 mg of a solid LiPF₆ powder, 5 mL of ethanol was added, and the resulting mixture was kneaded. The resultant was pressure bonded to a stainless steel mesh, followed by drying at 200°C for 4 hours, to thereby prepare a negative electrode. A mass of the carbon powder (black lead) in the negative electrode pressure bonded to the stainless steel mesh is 10 mg.

### (Example 5)

A semi-open cell type nonaqueous electrolyte secondary battery of Example 5 was produced in the same manner as in Example 1, provided that the amount of the solid LiPF₆ powder in the positive electrode was changed to 50 mg, and the separator produced in the following manner was used as a separator.

### <Separator>

Onto laboratory filter paper (ADVANTEC GA-100 GLASS FIBER FILTER), which was identical to the one used in Example 1, 150 mg of a solid LiPF₆ powder was applied and pressure bonded. The resultant was used as a separator.

### (Example 6)

A semi-open cell type nonaqueous electrolyte secondary battery of Example 6 was produced in the same manner as in Example 2, provided that the amount of the solid LiPF₆ powder in the negative electrode was changed to 50 mg, and the separator produced in the following manner was used as a separator.

### <Separator>

Onto laboratory filter paper (ADVANTEC GA-100 GLASS FIBER FILTER), which was identical to the one used in Example 2, 150 mg of a solid LiPF₆ powder was applied and pressure bonded. The resultant was used as a separator.

### (Example 7)

A semi-open cell type nonaqueous electrolyte secondary battery of Example 7 was produced in the same manner as in Example 4, provided that the amount of the solid LiPF₆ powder in the positive electrode was changed to 30 mg, the amount of the solid LiPF₆ powder in the negative electrode was changed to 50 mg and the separator produced in the following manner was used as a separator.

### <Separator>

Onto laboratory filter paper (ADVANTEC GA-100 GLASS FIBER FILTER), which was identical to the one used in Example 4, 120 mg of a solid LiPF₆ powder was applied and pressure bonded. The resultant was used as a separator.

### (Example 8)

A semi-open cell type nonaqueous electrolyte secondary battery of Example 8 was produced in the same manner as in Comparative Example 1, provided that the positive electrode produced in the following manner was used as a positive electrode.

### <Production of Positive Electrode>

To a mixture of 10 mg of a carbon powder (KS-6, manufactured by TIMCAL Ltd.), which was identical to the one used in Comparative Example 1, 200 mg of a solid LiClF₆ powder, 2.5 mg of a binder (PVDF, manufactured by KUREHA CORPORATION), and 30 mg of an electroconductive agent (contents: 95% by mass of acetylene black, and 5% by mass of polytetrafluoroethylene), 5 mL of ethanol was added, and the resulting mixture was kneaded. The resultant was pressure bonded to a stainless steel mesh, followed by drying at 200°C for 4 hours, to thereby prepare a positive electrode. A mass of the carbon powder (black lead) in the positive electrode pressure bonded to the stainless steel mesh was 10 mg.

Next, each of the produced nonaqueous electrolyte secondary batteries was subjected to evaluation for various properties thereof in the following manner. The results are presented in Table 1-2.

### <Measuring Method of Discharge Capacity after 10 Cycles >

Each of the produced nonaqueous electrolyte secondary batteries was charged to the charge termination voltage of 5.4 V at room temperature (25°C) with constant current of 1 mA (1C). After the first charging, the battery was discharged to 3.0 V with constant current of 1 mA. This cycle of charging and discharging was repeated 10 times. The discharge capacity after the 10 cycles was measured by means of a charge-discharge test device (HJ-SD8 System, manufactured by Hokuto Denko Corporation). Note that, the discharge capacity is a mass conversion value per 10 mg of the positive electrode active material.

### <Measuring Method of Discharge Voltage>

The discharge voltage of each of the produced nonaqueous electrolyte secondary batteries was measured by means of a charge-discharge test device (HJ-SD8 System, manufactured by Hokuto Denko Corporation).

<Evaluation of presence of Solid Lithium Salt inside Battery at 25°C, Discharge Voltage of 4.0 V>

After discharging each of the produced nonaqueous electrolyte secondary batteries at 25°C, with discharge voltage of 4.0 V, each of the nonaqueous electrolyte secondary batteries was disassembled. A surface of the positive electrode, a surface of the negative electrode, a surface of the separator, and an inner surface of the battery outer tin were observed under a microscope (SMZ-1500, manufactured by NIKON CORPORATION). If there were crystals slightly light other than black lead of the active material, which appeared black, such crystals were crystals of LiPF₆. In this manner, a presence of solid LiPF₆ inside the battery was evaluated.

**Table 1-1**

| | Positive Electrode | Negative Electrode | Separator |
|---|---|---|---|
| Ex. 1 | carbon powder+LiPF₆ powder+electroconductive agent+binder | carbon powder+binder | laboratory filter paper |
| Ex. 2 | carbon powder+electroconductive agent+binder | carbon powder+LiPF₆ powder+binder | laboratory filter paper |
| Ex. 3 | carbon powder+electroconductive agent+binder | carbon powder+binder | laboratory filter paper+LiPF₆ powder |
| Ex. 4 | carbon powder+LiPF₆ powder+electroconductive agent+binder | carbon powder+LiPF₆ powder+binder | laboratory filter paper |
| Ex. 5 | carbon powder+LiPF₆ powder+electroconductive agent+binder | carbon powder+binder | laboratory filter paper+LiPF₆ powder |
| Ex. 6 | carbon powder+electroconductive agent+binder | carbon powder+LiPF₆ powder+binder | laboratory filter paper+LiPF₆ powder |
| Ex. 7 | carbon powder+LiPF₆ powder+electroconductive agent+binder | carbon powder+LiPF₆ powder+binder | laboratory filter paper+LiPF₆ powder |
| Ex. 8 | carbon powder+LiClF₆ powder+electroconductive agent+binder | carbon powder+binder | laboratory filter paper |
| Comp. Ex. 1 | carbon powder+electroconductive agent+binder | carbon powder+binder | laboratory filter paper |
| Comp Ex. 2 | carbon powder+electroconductive agent+binder | carbon powder+binder | laboratory filter paper |

**Table 1-2**

| | Nonaqueous electrolyte | Discharge capacity after 10^{th} cycle (mAh/g) | Discharge voltage (V) | Presence of solid lithium salt at 25°C, discharge voltage of 4.0 V |
|---|---|---|---|---|
| Ex. 1 | Nonaqueous solvent containing 1 mol/L of LiPF₆ | 100 | 3.0 to 5.4 | Present |
| Ex. 2 | Nonaqueous solvent containing 1 mol/L of LiPF₆ | 110 | 3.0 to 5.4 | Present |
| Ex. 3 | Nonaqueous solvent containing 1 mol/L of LiPF₆ | 90 | 3.0 to 5.4 | Present |
| Ex. 4 | Nonaqueous solvent containing 1 mol/L of LiPF₆ | 100 | 3.0 to 5.4 | Present |
| Ex. 5 | Nonaqueous solvent containing 1 mol/L of LiPF₆ | 110 | 3.0 to 5.4 | Present |
| Ex. 6 | Nonaqueous solvent containing 1 mol/L of LiPF₆ | 100 | 3.0 to 5.4 | Present |
| Ex. 7 | Nonaqueous solvent containing 1 mol/L of LiPF₆ | 100 | 3.0 to 5.4 | Present |
| Ex. 8 | Nonaqueous solvent containing 1 mol/L of LiPF₆ | 80 | 3.0 to 5.4 | Present |
| Comp Ex. 1 | Nonaqueous solvent containing 1 mol/L of LiPF₆ | 30 | 3.0 to 5.4 | Not present |
| Comp Ex. 2 | Nonaqueous solvent containing 5 mol/L of LiPF₆ | 50 | 3.0 to 5.4 | Not present |

It was found from the results of Table 1-2, the nonaqueous electrolyte secondary batteries of Examples 1 to 8, which contained solid lithium salts each attained a high discharge capacity. As the excess amount of the lithium salt was large, in Examples 1 to 8, the solid lithium was precipitated inside the battery with all discharge voltages (3.0 V to 5.4 V) including the discharge voltage of 4.0 V.

As the amount of the lithium salt in the nonaqueous electrolyte was small in Comparative Example 1, the amount of the lithium salt became insufficient due to charging, and therefore the discharge capacity became extremely small after 10 cycles.

In Comparative Example 2, a thick nonaqueous electrolyte was used to secure an amount of the lithium salt in the nonaqueous electrolyte, but the thick electrolyte could not form an initial film on a surface of the electrode carbon. Therefore, the properties of the battery were deteriorated after few cycles of charging and discharging, and the discharging capacity after 10 cycles became small.

### (Example 9)

Nonaqueous electrolyte secondary batteries of Nos. 1 to 5 presented in Table 2 were produced by varying an amount of a solid LiPF₆ powder added to the positive electrode as depicted in Table 2 in the following manner, followed by subjected to an evaluation of an initial discharge capacity.

### <Production of Positive Electrode>

To a mixture of 100 mg of a carbon powder (KS-6, manufactured by TIMCAL Ltd.), which was identical to the one used in Comparative Example 1, X mg (X was the value depicted in Table 2) of a solid LiPF₆ powder, 2.5 mg of a binder (PVDF, manufactured by KUREHA CORPORATION), and 300 mg of an electroconductive agent (contents: 95% by mass of acetylene black, and 5% by mass of polytetrafluoroethylene), 5 mL of ethanol was added, and the resulting mixture was kneaded. The resultant was pressure bonded to a stainless steel mesh, followed by drying at 200°C for 4 hours, to thereby prepare a positive electrode.

### <Production of Negative Electrode>

To a mixture of 100 mg of a carbon powder (MAGD, manufactured by Hitachi Chemical Co., Ltd.), which was identical to the one used in Comparative Example 1, and 40 mg of a binder (a 20% by mass N-methylpyrrolidone (NMP) solution of polyvinylidene fluoride, product name: KF Polymer, manufactured by KUREHA CORPORATION), 5 mL of ethanol was added, and the resulting mixture was kneaded. The resultant was pressure bonded to a stainless steel mesh, followed by drying at 200°C for 4 hours, to thereby prepare a negative electrode.

### <Nonaqueous Electrolyte>

As for a nonaqueous electrolyte, 0.3 mL of a solvent [ethylene carbonate (EC): dimethyl carbonate (DMC) = 1:2 (volume ratio)], in which 1 mol/L of LiPF₆ had been dissolved, was prepared.

### <Separator>

As for a separator, laboratory filter paper (ADVANTEC GA-100 GLASS FIBER FILTER) was provided.

### <Production of Battery>

In an argon dry box, the produced positive electrode and negative electrode were provided adjacent to each other with the separator being present between the positive electrode and the negative electrode as illustrated in FIG. 1, to thereby produce each of semi-open cell type nonaqueous electrolyte secondary batteries of Nos. 1 to 5 presented in Table 2.

### <Measurement of Initial Discharge Capacity>

Each of the produced nonaqueous electrolyte secondary batteries was charged to the charge termination voltage of 5.4 V at room temperature (25°C) with constant current of 1 mA (1C). After the first charging, the battery was discharged to 3.0 V with constant current of 1 mA. The discharge capacity after this initial charging and discharging was measured by means of a charge-discharge test device (HJ-SD8 System, manufactured by Hokuto Denko Corporation). Note that, the discharge capacity is a mass conversion value per 10 mg of the positive electrode active material. The results are presented in Table 2.

**Table 2**

| No. | Positive electrode | Amount of LiPF₆ powder:X | Initial discharge capacity (mAh/g) |
|---|---|---|---|
| 1 | carbon powder+ LiPF₆ powder+electroconductive agent+binder | 0 mg | 40 |
| 2 | carbon powder+ LiPF6 powder+electroconductive agent+binder | 20 mg | 70 |
| 3 | carbon powder+ LiPF₆ powder+electroconductive agent+binder | 50 mg | 80 |
| 4 | carbon powder+ LiPF₆ powder+electroconductive agent+binder | 100 mg | 100 |
| 5 | carbon powder+ LiPF₆ powder+electroconductive agent+binder | 200 mg | 100 |

In both of the case where the amount of the solid LiPF₆ powder added to the negative electrode was changed, and the case where the amount of the solid LiPF₆ powder added to the separator was changed, the same result was obtained to the case where the amount of the solid LiPF₆ powder added to the positive electrode in Example 9.

### Reference Signs List

- 1: positive electrode
- 2: negative electrode
- 3: separator
- 4: battery outer tin
- 5: negative electrode lead wire
- 6: positive electrode lead wire
- 10: nonaqueous electrolyte secondary battery

## Claims

1. A nonaqueous electrolyte secondary battery, compositing:
a positive electrode, which contains a positive electrode active material capable of inserting and detaching anions;
a negative electrode, which contains a negative electrode active material capable of accumulating and releasing metal lithium, or lithium ions, or both thereof; and
a nonaqueous electrolyte formed by dissolving a lithium salt in a nonaqueous solvent,
wherein the nonaqueous electrolyte secondary battery contains a solid lithium salt at 25°C, and discharge voltage of 4.0 V.

2. The nonaqueous electrolyte secondary battery according to claim 1, further comprising a separator between the positive electrode and the negative electrode, wherein the solid lithium salt is contained in at least one selected from the group consisting of the positive electrode, the negative electrode, and the separator.

3. The nonaqueous electrolyte secondary battery according to claim 1 or 2, wherein the positive electrode active material is a carbonaceous material.

4. The nonaqueous electrolyte secondary battery according to any one of claims 1 to 3, wherein the negative electrode active material is a carbonaceous material.

5. The nonaqueous electrolyte secondary battery according to any one of claims 1 to 4, wherein the lithium salt is LiPF₆.
